# EUROPÄISCHE PATENTSCHRIFT

(11) **EP 1 976 099 B1**
(45) Veröffentlichungstag und Bekanntmachung des Hinweises auf die Patenterteilung: **07.11.2018**
(21) Anmeldenummer: 08152308.6
(22) Anmeldetag: 05.03.2008
(51) Int. Cl.: H02K 9/28, H02K 5/20, H02K 5/14

(54) **Elektromotor mit einem Rotor und einem Stator**
Electromotor with a rotor and a stator
Moteur électrique doté d'un rotor et d'un stator

(30) Priorität: 27.03.2007 DE 102007014507
(43) Veröffentlichungstag der Anmeldung: 01.10.2008
(73) Patentinhaber: Vorwerk & Co. Interholding GmbH, 42275 Wuppertal (DE)
(72) Erfinder: Varnhorst, Mathias, 42349, Wuppertal (DE); Lichau, Christian, 44625, Herne (DE); Schmidt, Dirk, 51688, Wipperfürth (DE); Kraut-Reinkober, Stefan, 51381, Leverkusen (DE)
(74) Vertreter: Müller, Enno

(56) Entgegenhaltungen:
- DE-A1-102005 010 459
- DE-C- 853 474
- US-A- 3 731 121

## Beschreibung

Die Erfindung betrifft einen Elektromotor nach den Merkmalen des Oberbegriffes des Anspruches 1.
Elektromotoren der in Rede stehenden Art sind bekannt. Hier wird beispielsweise auf die DE 102005010459 A1 verwiesen. In dieser ist ein Elektromotor der in Rede stehenden Art dargestellt und beschrieben, welcher eine Lagerbrücke aufweist. Diese formt die Kohlenführungen aus und bildet zugleich die Aufnahme für das Gleitlager. Um das Temperaturverhalten im Bereich des Gleitlagers der Rotorwelle zu verbessern, sind radial außerhalb des Gleitlagers in Richtung der Rotorwelle verlaufende Luftwege ausgebildet.

Aus der DE A 853 474 ist ein Elektromotor bekannt, der keine gesonderte Ausbildung einer Lagerbrücke aufweist.

Ausgehend von dem zunächst genannten Stand der Technik beschäftigt sich die Erfindung mit der Aufgabenstellung, einen Elektromotor der genannten Art anzugeben, der insbesondere im Hinblick auf eine Luftführung vorteilhaft ausgebildet ist.

Diese Aufgabe ist beim Gegenstand des Anspruches 1 gelöst, wobei darauf abgestellt ist, dass die Lagerbrücke auf der dem Lüfterrad zugewandten Seite einen in ein Polrohr des Stators einragenden und das Lüfterrad radial überragenden Lüftungssteg aufweist.

Der Lüftungssteg sorgt im Betrieb des Elektromotors für eine verbesserte Luftführung des über das Lüfterrad erzeugten Luftstromes. Der Luftführungssteg ist hierbei an der Lagerbrücke, zugewandt dem Polrohr angeordnet und greift im montieren Zustand in die Polrohröffnung ein, dies weiter sich radial innen an der Polrohrwandung abstützend. Über diesen Luftführungssteg wird dem mittels des Lüfterrades in dem Polrohr umwälzenden Luftstrom eine Leitrichtung aufgeprägt, die zu einer verbesserten Abfuhr insbesondere durch in dem Polrohr vorgesehene Austrittsöffnungen führt.

Der Luftführungssteg ist in einer Weiterbildung des Erfindungsgegenstandes so angeordnet, dass dieser in Umfangsrichtung gesehen zugeordnet einer in dem Polrohr ausgebildeten Radialöffnung endet. Der Luftführungssteg leitet entsprechend die Luftströmung gezielt in Richtung auf die bevorzugt unmittelbar nachgeschaltete Radialöffnung. Der Luftführungssteg ist weiter so ausgeformt, dass der sich im Wesentlichen entlang der Polrohrinnenwandung umlaufenden Luftströmung eine Radialkomponente aufgeprägt wird, zur gezielten Abfuhr durch die polrohrseitige Radialöffnung.

Es sind weiter bevorzugt ein oder mehrere Luftführungsstege vorgesehen, die bei radialer Überdeckung zu dem Lüfterrad in Umfangsrichtung betrachtet mit einem zunehmenden Abstand zur Rotorwelle ausgeformt sind. Dem zufolge öffnet sich ein zwischen Lüfterrad und Luftführungssteg sich einstellender Spalt in Rotationsrichtung des Lüfterrades. Der Luftführungssteg ist entsprechend in einem senkrecht zur Rotorwellenachse betrachteten Querschnitt zugewandt dem Lüfterrad leitschaufelartig gebildet.

In einer bevorzugten Ausgestaltung sind über den Umfang verteilt vier solcher Luftführungsstege vorgesehen, wobei nicht zwingend jedem Luftführungssteg unmittelbar eine polrohrseitige Radialöffnung nachgeordnet sein muss. Die Luftführungsstege können weiter paarweise sich diametral gegenüberliegend angeordnet sein, so weiter beispielsweise unter Einschluss eines Winkels von 90° zwischen zwei in Umfangsrichtung benachbarten Luftführungsstegen. Alternativ können die zwei Luftführungssteg-Paare auch mit Bezug zur Rotationsachse so angeordnet sein, dass paarweise Verbindungslinien zwischen den Luftführungsstegen, die zugleich auch die Rotationsachse schneiden, einen spitzen Winkel von 30° bis 60° zueinander einnehmen.

Die Luftführungsstege können gleichgestaltet sein, dies sowohl hinsichtlich ihrer in Umfangsrichtung gemessenen Breite als auch hinsichtlich des in Umfangsrichtung zunehmenden Abstandes zur Rotorwelle. Alternativ und bevorzugt weisen die Luftführungsstege zweier Paare in Umfangsrichtung gesehen unterschiedliche Abmessungen auf. So ist ein Paar Luftführungsstege mit einer in Umfangsrichtung gemessenen Breite versehen, die etwa dem Drei- bis Fünffachen, bevorzugt dem ca. Vierfachen der in selber Richtung gemessenen Breite der Luftführungsstege des anderen Paares entspricht. Auch bei unterschiedlicher Breitenauslegung der Luftführungsstege sind die dem Lüfterrad zugewandten Flächen stets so gebildet, dass diese über ihre Breite betrachtet ein gleiches zunehmendes Radial-Beabstandungsmaß zur Rotorwelle aufweisen. Entsprechend steiler nach radial außen verlaufen die dem Lüfterrad zugewandten Flächen kleinerer Luftführungsstege.

In einer Weiterbildung des Erfindungsgegenstandes ist vorgesehen, dass jeder Kohlenführung zwei flankierende Luftwege zugeordnet sind, so weiter in Rotationsrichtung der Rotorwelle bzw. des Kommutators betrachtet beidseitig der Kohlenführung, womit weiter die Kühlung der in der Kohlenführung aufgenommenen Kohlenbürste weiter verbessert ist. Bevorzugt sind diese flankierenden Luftwege im Bereich des Endabschnittes der Kohlenführung, das heißt im unmittelbaren Zusammenwirkungsbereich von Kohlenbürste und Kommutator positioniert. Die zwei jeweils einer Kohlenführung zugeordneten Luftwege sind bevorzugt über eine die Kohlenführung querende Nut verbunden. Hierdurch wird der Ablagerung von Kohlenstaub im Zusammenwirkungsbereich von Kohlenbürste und Kommutator entgegengewirkt. Weiter ist hierdurch eine möglichst lange elektrische Kriechstrecke realisiert. Diese Nut ist weiter bevorzugt in dem zugleich das Gleitlager tragenden Abschnitt der Lagerbrücke ausgeformt, wobei weiter die Querung der Kohlenführung durch die Nut außerhalb eines Bereiches einer Projektion der Kohlenführung bzw. der Kohlenbürste auf den Kommutator vorgesehen ist. Bevorzugt sind jeder Kohlenführung flankierend zwei Luftwege und eine die Luftwege verbindende Nut vorgesehen. Weiter ist die Nut außerhalb der Luftwege nach radial außen geschlossen. Axial nach innen in Richtung auf den Kommutator weisend ist die Nut bevorzugt geöffnet. In die entgegengesetzte Richtung, das heißt vom Kommutator weg weisend in Richtung auf das Gleitlager ist die Nut zumindest partiell von einem Filzring überdeckt. Dieser Filzring bildet ein Öldepot für das Gleitlager, aus dem zum Beispiel durch Erwärmung des Motors vermehrt Öl austritt. Dieser das Öldepot aufweisende Filzring ist zufolge dieser Ausgestaltung auf der der motorabgewandten Seite in der Lagerbrücke angebracht. Zum Motor hin, insbesondere zum Kommutator und zu den Kohlenführungen hin ist der Filzring durch einen Lagerbrückenabschnitt überdeckt. Zufolge dieser Ausgestaltung wird wirksam eine Beeinträchtigung der Kohlestandzeit durch Öle vermieden.

Im Weiteren ist vorgesehen, dass die Öffnung eines flankierend zu einer Kohlenführung angeordneten Luftweges sich in radialer Projektion auf dem Kommutator abbildet. Die hierbei durchaus sich weiterhin zunächst in Richtung der Rotorwelle, das heißt im Wesentlichen achsparallel zur Rotorwelle verlaufenden Luftwege öffnen sich zufolge der vorgeschlagenen Lösung im Innern der Lagerbrücke nach radial innen; formen dort entsprechende fensterartige Öffnungen aus, die weiter in radialer Überdeckung zu dem Kommutator positioniert sind. Bei ggf. auch partieller radialer Öffnung des Luftweges nach außen ist flankierend zu einer Kohlenführung ein Luftwege-Fenster geschaffen. Zufolge dieser Ausgestaltung ist zum Einen eine verbesserte Kühlung des Gleitlagers erreicht. Darüber hinaus auch eine verbesserte Wärmeabfuhr aus dem Bereich der Kohlenführung; entsprechend eine verbesserte Kühlung der aufgenommenen Kohlen. Zusätzlich wird bei einer bevorzugten Ausgestaltung der Lagerbrücke aus einem Kunststoffmaterial der Kunststoff im unmittelbaren Gleitlagersitz optimal gekühlt. Durch die radiale Öffnung des Luftweges nach innen wird dem im Wesentlichen axial in das Motorinnere einströmenden Luftstrom eine radiale Komponente nach innen aufgeprägt.

Um die Sicherheit des Elektromotors im Betrieb gegen Hochspannungsfehler weiter zu erhöhen, ist vorgesehen, dass die Lagerbrücke auf der dem Lüfterrad zugewandten Seite, in Rotationsrichtung des Lüfterrades betrachtet vor einer Kohlenführung eine an einer Höhe der Kohlenführung orientierte Leitausformung für die Luftströmung aufweist. Diese auf der Luvseite der Kohlenführung vorgesehene Leitausformung bewirkt eine wirksame Abführung des Kohlenstaubes aus dem zugewandten Wandungsbereich der Kohlenführung, an welcher Wandung sich sonst Kohlenstaub absetzen kann. Zufolge der Anordnung von Leitausformungen wird dem in Rotationsrichtung versetzten, gegebenenfalls kohlenstaubbehafteten Luftstrom eine axiale Komponente aufgeprägt zur hindernisfreien Ableitung des Luftstromes über die Kohlenführung hinaus.

Die Leitausformung kann in Art einer geschlossenen Rampe geformt sein. Bevorzugt wird eine Ausgestaltung, bei welcher die Leitausformung durch Toträume unterbrochen ist, dies weiter bei insgesamt rampenartiger Ausgestaltung. In den Toträumen kann sich Kohlenstaub ablagern, womit eine geschlossene Kohlestaubschicht vermieden wird, die zu einem Fehlerstrom führen würde. So kann weiter die Rampenausformung durch einzelne, in Richtung der Kohlenführung stufenartig ansteigende Rippen gebildet sein. Diesbezüglich können zwei bis zehn, bevorzugt drei bis fünf solcher Rippen in Rotationsrichtung hintereinander angeordnet vorgesehen sein, deren freien in Axialrichtung betrachteten Endbereiche zur insgesamten Ausbildung der Rampenausformung abgeschrägt verlaufen, wobei weiter die abgeschrägten Endbereiche der hintereinander angeordneten Rippen bevorzugt eine gemeinsame Ebene aufspannen.

Die Rippen belassen in Rotationsrichtung des Rotors betrachtet zwischen sich jeweils einen, einen Totraum bildenden Freiraum. In diesen Freiräumen wird im Bodenbereich der Kohlestaub abgelagert.

Sind in Richtung der Rotorwelle verlaufende Luftwege ausgebildet, so sind in einer bevorzugten Ausgestaltung die Rampenausformungen dem in Rotationsrichtung vor der Kohlenführung ausgebildeten Luftweg zugeordnet, so weiter beispielsweise in einer Projektion auf eine senkrecht zur Rotorwelle ausgerichteten Ebene radial außerhalb des Luftweges und in Verlängerung desselben, was zufolge der durch die Luftwege transportierten Luft zu einem verbesserten Abtransport des auch sich zwischen den Rippen ansammelnden Kohlenstaubes führt.

In einer bevorzugten Ausgestaltung des Erfindungsgegenstandes ist vorgesehen, dass die Rampenausformung aus drei in Richtung der Rotorwelle betrachtet unterschiedlich hohen Rippen gebildet ist. Als besonders vorteilhaft erweist sich diesbezüglich, wenn jeder Kohlenführung in Rotationsrichtung des Lüfterrades betrachtet eine Rampenausformung vorgeordnet ist.

In einer weiter bevorzugten Ausgestaltung ist die Lagerbrücke als Kunststoffteil ausgebildet, wobei weiter die Luftführungsstege materialeinheitlich einstückig insbesondere bei einer Herstellung der Lagerbrücke im Kunststoffspritzverfahren angeformt sind.

Um einen Elektromotor der in Rede stehenden Art, insbesondere im Bereich des Gleitlagers funktionssicherer auszugestalten, ist ein Leitblech vorgesehen, das die Klemmbrille und das Polrohr kontaktiert. Über dieses Leitblech werden elektrische Lagerströme sofort abgeleitet und können kein hohes Potential erreichen. Solche elektrischen Lagerströme zerstören in kurzer Zeit insbesondere Rillenkugellager, die üblicherweise in derartigen Motoren zumindest auf einer Seite des Rotors eingesetzt werden. Darüber hinaus werden auch die Öle des Gleitlagers durch elektrische Ströme zerstört und die Lebensdauer stark reduziert. Bei dem Leitblech kann es sich in einfachster Weise um ein Biege-Stanzteil handeln, weiter beispielsweise um ein Messing-Stanzteil.

In einer bevorzugten Ausgestaltung des Erfindungsgegenstandes ist vorgesehen, dass das Polrohr mit dem Leitblech über eine Festlegungslasche zur Halterung des Polrohres an der Lagerbrücke in Kontakt ist. Entsprechend erfolgt die Kontaktierung des Leitbleches im Zuge der Montage von Polrohr und Lagerbrücke, wobei weiter das Leitblech durch eine nutförmige Führung in der bevorzugt aus einem Kunststoffmaterial bestehenden Lagerbrücke geführt ist.

Zur Kontaktierung der mit dem Kommutator zusammenwirkenden Kohlen werden köcherartige Kontaktbleche in die Kohlenführungen eingebracht. Diese köcherartigen Bleche umfassen die Kohle mehrseitig, so weiter in der Regel diese im Querschnitt umlaufend umfassend. Diesbezüglich ist weiter bekannt, einstückig aus dem Kontaktblech einen Anschluss in Form einer Anschlussfahne für einen Steckkontakt auszubilden, über welchen die elektrische Kontaktierung erfolgt.

Um eine vereinfachte Kontaktierung der Kohle zu erreichen, ist vorgesehen, dass das Kontaktblech ebenflächig in einen Anschlussabschnitt zur Kontaktierung des Steckkontaktes übergeht, dies weiter auch im betriebsbereiten Zustand, das heißt nach Bestückung der Kohlenführung mit dem Kontaktblech und gegebenenfalls auch weiter nach Anordnung eines Steckkontaktes auf dem Anschlussabschnitt. Im Allgemeinen geht das Kontaktblech ausgehend von dem Anschlussabschnitt ebenflächig in einen eine Kohlenbürstenseite flächig beaufschlagenden Kontaktabschnitt über. Entsprechend kann die Kohlenkontaktierung und Steckkontaktierung des Anschlussabschnittes in einer gemeinsamen Ebene erfolgen.

So ist in einer bevorzugten Ausgestaltung des Erfindungsgegenstandes vorgesehen, dass das Kontaktblech in einer, die Kohlenführung fußseitig durchsetzenden Schlitzaufnahme aufgenommen ist. Entsprechend ist das Kontaktblech bevorzugt in einfachster Weise durch Einschieben in die Schlitzaufnahme der Lagerbrücke und der in der Lagerbrücke ausgeformten Kohlenführung zuordbar. Die Schlitzaufnahme kann mit Haltemitteln versehen sein, die mit entsprechenden Gegenmitteln des Kontaktbleches zusammenwirken, zur selbsttätigen Festlegung des Kontaktblechs in der eingeschobenen Betriebsstellung. Die Schlitzaufnahme ist hierbei so positioniert, dass die die Kohle aufnehmende Öffnung der Kohlenführung sich zum einzuschiebenden Kontaktblech hin öffnet, was die Kontaktierung der Kohle in der Kohlenführung über ihre gesamte Länge zur Folge hat. So ist weiter vorgesehen, dass das Kontaktblech nur eine von vier Wänden der Kohlenführung abdeckt. Entsprechend ist hinsichtlich der Kohlekontaktierung kein Abwinkeln von Kontaktblechabschnitten erforderlich, was die Montage des Kontaktbleches an der Lagerbrücke wesentlich vereinfacht.

Zudem ist vorgesehen, dass eine zunächst sich bevorzugt in derselben Ebene wie die Kohlenkontaktfläche des Kontaktbleches erstreckende Kontaktfahne zum Verschließen der Kohlenführung aus der Ebene umgebogen ist. Diese Kontaktfahne bildet die rückwärtige Abstützung der die Bürstenkohle in Richtung auf den Kommutator belastenden Druckfeder, welche Kontaktfahne erst nach Einsetzen der Kohlenbürste und der rückwärtigen Druckfeder abgebogen wird. Dies weiter bevorzugt um einen Winkel von 90°, womit weiter auch die Kohlenführung zu der dem Kommutator abgewandten Seite hin verschlossen ist.

Des Weiteren kann das Kontaktblech einstückig einen Schneidklemmabschnitt aufweisen, an welchem ein elektronisches Bauteil an der Lagerbrücke kontaktiert und festgelegt ist. So kann über den Schneidklemmbereich beispielsweise ein Anschlussbein eines Funkentstörkondensators mit dem Kontaktblech elektrisch verbunden sein. Mittels des Schneidklemmabschnittes ist die Festlegung und Kontaktierung des elektronischen Bauteiles im Zuge der Bestückung der Lagerbrücke mit dem Kontaktblech in einfachster Weise herstellbar. Es bedarf keiner weiteren Handgriffe, um diese elektrische Verbindung herzustellen. In einer bevorzugten Ausgestaltung ist der Schneidklemmabschnitt ebenengleich zu dem Anschlussabschnitt ausgebildet, weiter bevorzugt ebenengleich auch mit dem die Kohle kontaktierenden Kontaktabschnitt und mit der noch nicht in die die Kohle und die Druckfeder sichernde Stellung umgebogenen Kontaktfahne.

So ist weiter das Kontaktblech ein Stanzteil, weiter bevorzugt ein Messing-Stanzteil. Ein solches ebenflächiges Stanzteil ist einfach und kostengünstig herstellbar. Dieses wird ohne weitere Bearbeitung, insbesondere Biegebearbeitung der Lagerbrücke zugeführt, durch Einführen in die vorgesehene Schlitzaufnahme, welche Schlitzaufnahme zu dem sich im Wesentlichen auch nur in einer Ebene erstreckt, weiter insbesondere in einer senkrecht zur Rotorwellenachse sich erstreckenden Ebene.

Nachstehend ist die Erfindung anhand der beigefügten Zeichnung, welche lediglich ein Ausführungsbeispiel darstellt, erläutert. Es zeigt:
- Fig. 1: einen Elektromotor der in Rede stehenden Art in Seitenansicht;

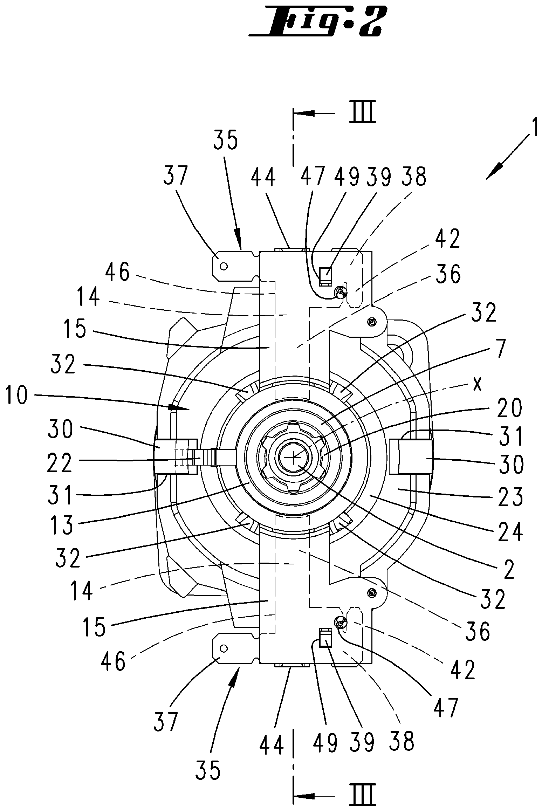

- Fig. 2: die Stirnansicht gemäß Pfeil II in Fig. 1 hierzu;
- Fig.3: den vergrößerten Schnitt gemäß der Linie III - III in Fig. 2;

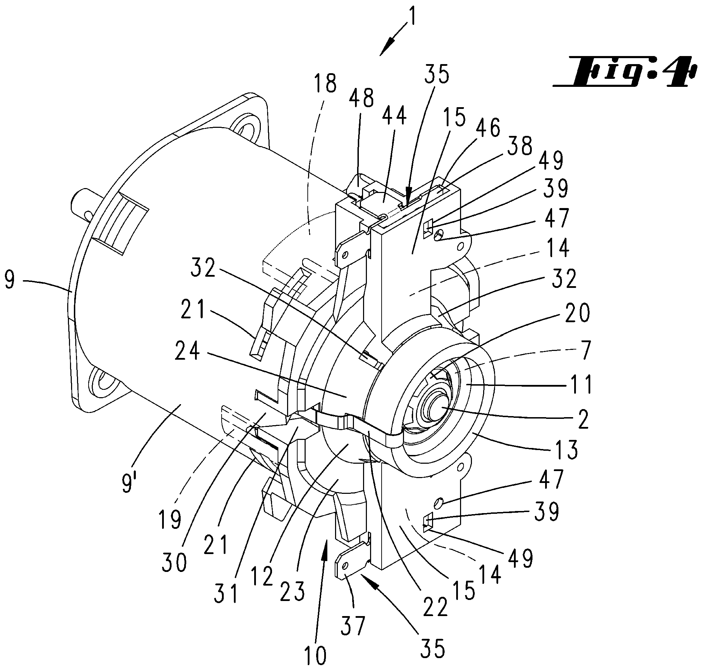

- Fig.4: den Elektromotor in einer perspektivischen Darstellung;

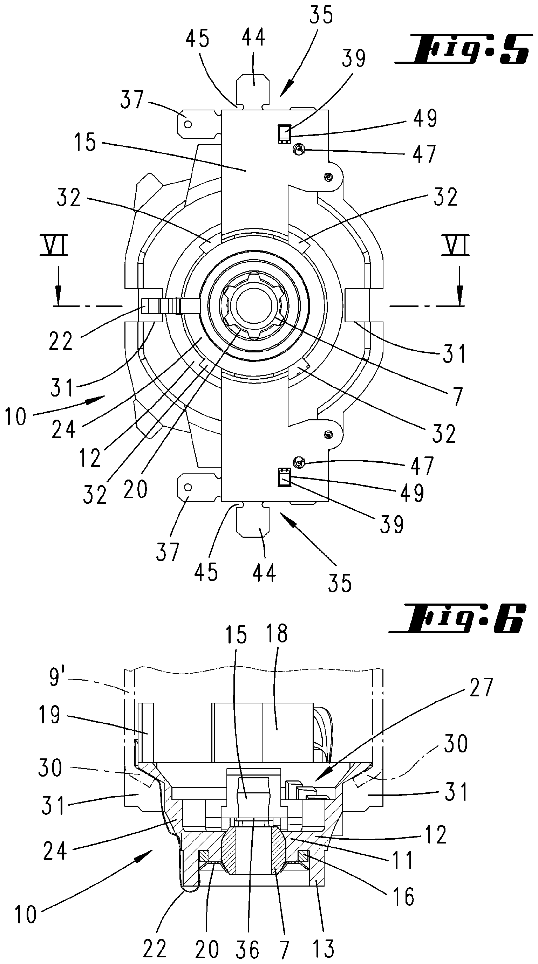

- Fig. 5: in Stirnansicht eine Lagerbrücke des Elektromotors in Einzeldarstellung;
- Fig. 6: den Schnitt gemäß der Linie VI - VI in Fig. 5 durch die Lagerbrücke;

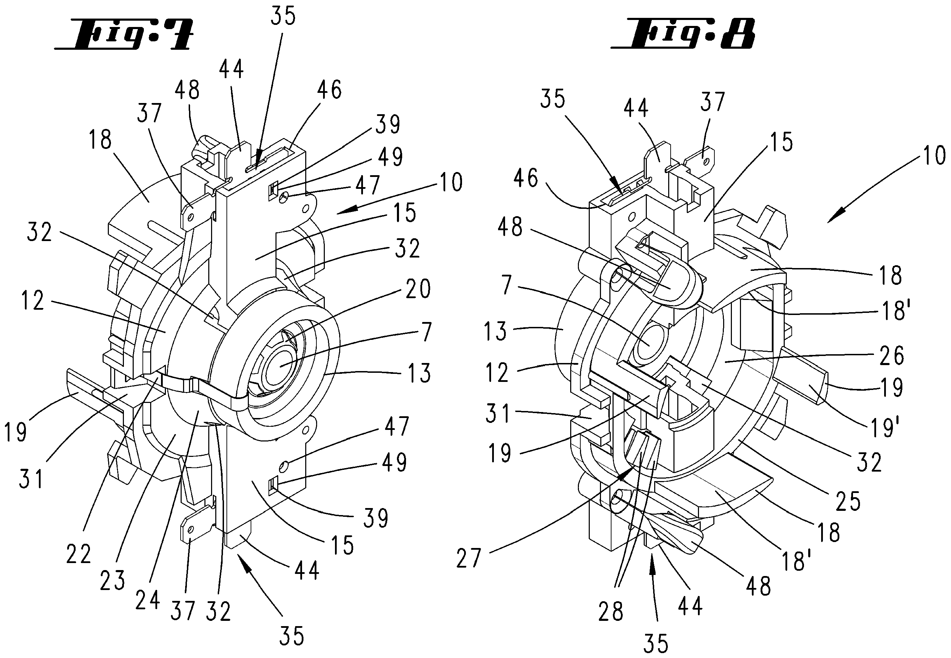

- Fig.7: die Lagerbrücke in einer perspektivischen Einzeldarstellung;
- Fig.8: eine weitere perspektivische Darstellung der Lagerbrücke;

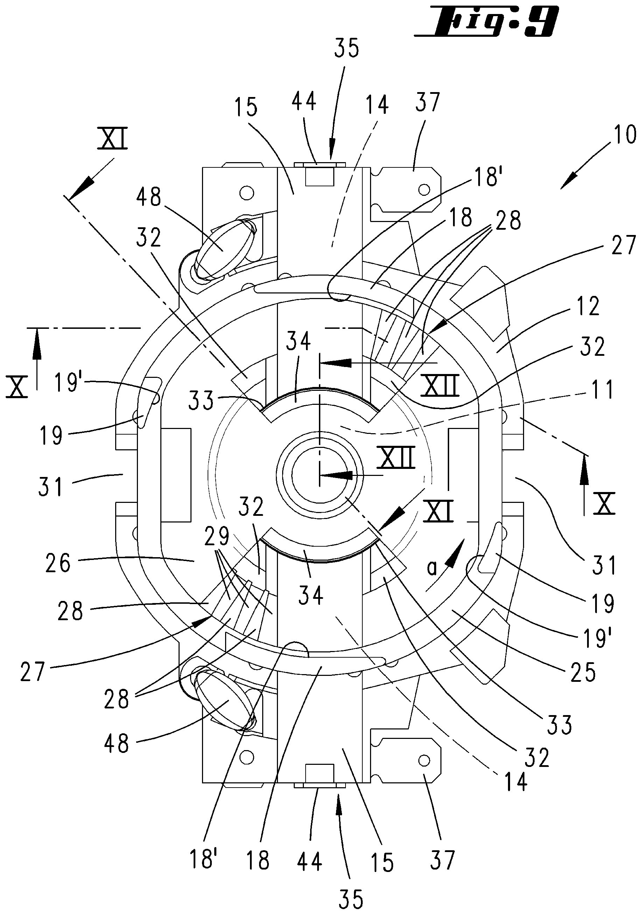

- Fig.9: eine vergrößerte Innenansicht der Lagerbrücke mit Blick auf die in Montagestellung einem Kommutator des Elektromotors zugewandten Seite;
- Fig. 10: den Schnitt gemäß der Linie X - X in Fig. 9;
- Fig. 11: den Schnitt gemäß der Linie XI -XI in Fig. 9;
- Fig. 12: den Schnitt gemäß der Linie XII - XII in Fig. 9;
- Fig. 13: ein Kontaktblech zum Kontaktieren von Kohlenbürsten in Einzeldarstellung;
- Fig. 14: den Schnitt gemäß der Linie XIV - XIV in Fig. 13 und
- Fig. 15: die Lagerbrücke und der Lagerbrücke zuordbare Bauteile sowie eine Rotorwelle und einen Kommutator in einer perspektivischen Explosionsdarstelung.

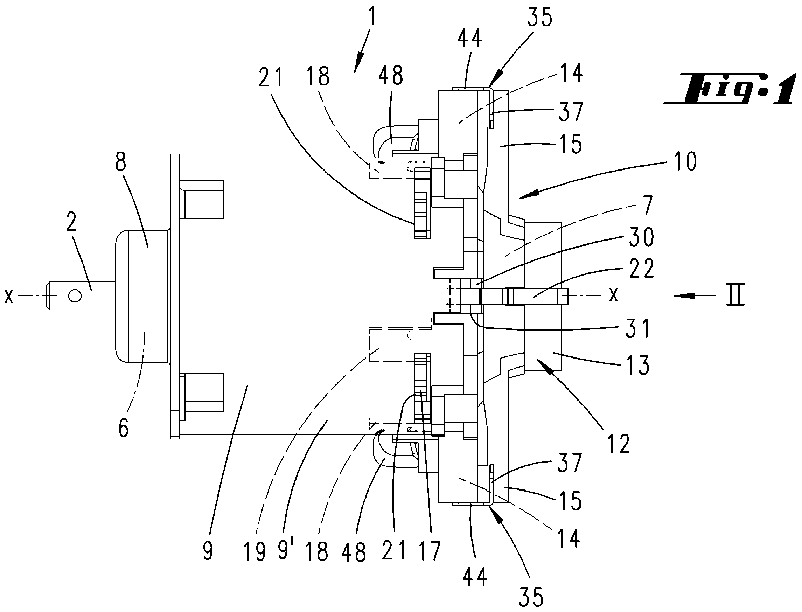

Dargestellt und beschrieben ist zunächst mit Bezug zu Figur 1 ein Elektromotor 1, welcher im Wesentlichen besteht aus einer Rotorwelle 2, einem auf letzterer drehfest angeordneten Rotor 3 und einem Stator 4, sowie einem Kommutator 5.

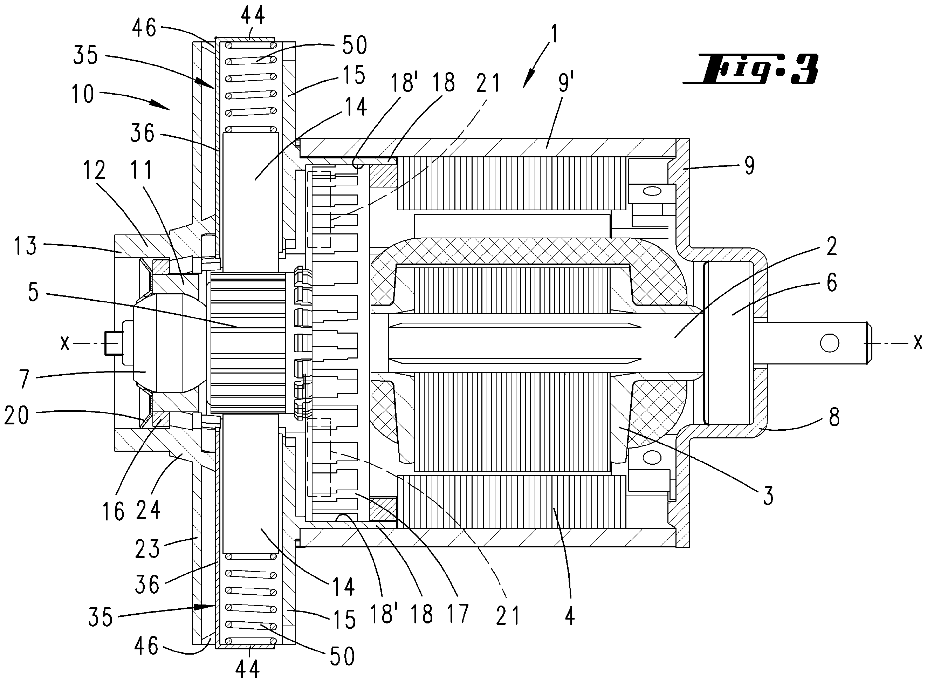

Wie insbesondere aus der Darstellung in Figur 3 zu entnehmen, ist die Rotorwelle 2 beidseitig des Rotors 3 gelagert, wobei der dem Kommutator 5 abgewandte Abschnitt der Rotorwelle 2 in einem nicht näher dargestellten Kugellager 6 gehalten ist.

Das über den Kommutator 5 hinausragende Ende der Rotorwelle 2 ist gehalten in einem Gleitlager 7, welches in dem dargestellten Ausführungsbeispiel als Kalottenlager ausgeformt ist.

Beide Lager (Kugellager 6 und Gleitlager 7) sind gehäuseseitig des Elektromotors gehaltert. Konkret ist die Ausgestaltung so gewählt, dass das Kugellager 6 im Bereich eines axial nach außen vorstehenden Doms 8 eines im Wesentlichen topfförmigen Motorgehäuses 9 gehaltert ist, dessen hohlzylinderförmige Motorgehäuse-Mantelwandung das Polrohr 9' bildet.

Innenwandig des Polrohres 9' ist der Stator 4 befestigt.

Das gegenüberliegende Gleitlager 7 ist in einer ein gesondertes Gehäuseteil bildenden Lagerbrücke 10 festgelegt. Dieses ist in dem dargestellten Ausführungsbeispiel ein Kunststoffteil. Diese Lagerbrücke 10 ist von axial außen auf die Rotorwelle 2 montiert und mit dem Motorgehäuse 9 klemmverbunden, wozu das Motorgehäuse 9, insbesondere das Polrohr 9' an der der Lagerbrücke 10 zugewandten Stirnrandkante zwei diametral gegenüberliegend angeordnete Festlegungslaschen 30 aufweist. Diese Laschen 30 werden zur Festlegung von Motorgehäuse 9 und Lagerbrücke 10 umgebördelt, zum Eingriff und Hintergriff jeweils eines entsprechend zugeordneten Laschen-Aufnahmeabschnittes 31 an der Lagerbrücke 10.

Die Lagerbrücke 10 weist des Weiteren einen zentralen Pfannenbereich 11 zur Aufnahme des Gleitlagers 7 auf. Das hierdurch gebildete Lagergehäuse 12 setzt sich fort in einen nach axial außen sich vom Pfannenbereich 11 erstreckenden Topfabschnitt 13.

Die vom Motorgehäuse 9 gesonderte Lagerbrücke 10 ist zugleich Träger von mit dem Kommutator 5 zusammenwirkenden Kohlen 14. Entsprechend sind zwei diametral zur Rotorwellenachse x gegenüberliegende Kohlenführungen 15 ausgeformt. Diese sind axial so zum Pfannenbereich 11 des Gehäuseteiles 10 distanziert, dass die aufzunehmenden Kohlen 14 in Radialerstreckung zum Kommutator 5 ausgerichtet sind.

Zur Zusammenwirkung mit dem Gleitlager 7, insbesondere zur Festsetzung desselben ist von axial außen auf die Rotorwelle 2 eine als Metallteil ausgeformte Klemmbrille 20 montiert. Diese sitzt in dem Lagergehäuse 12 ein unter federnder Klemmeinwirkung auf das Gleitlager 7.

Unterseitig der Klemmbrille 20, das heißt zugeordnet der dem Pfannenbereich 11 zugewandten Seite der Klemmbrille 20 ist ein den Pfannenbereich 11 ringförmig umgebender Filzring 16 vorgesehen. Dieser bildet ein Öldepot.

Auf der Rotorwelle 2 ist des Weiteren ein Lüfterrad 17 drehfest gehaltert. Dieses ist zwischen Kommutator 5 und Rotor 3 positioniert und mit einem Durchmesser versehen, der etwa dem 0,9- bis 0,95-Fachen des Polrohr-Innendurchmessers entspricht. So verbleibt zwischen der Polrohr-Innenwandung und der umlaufenden Außenkontur des Lüfterrades 17 ein Ringspalt. In diesen Ringspalt ragen partiell Luftführungsstege 18 und 19 ein. Diese sind einstückig, materialeinheitlich mit der Lagerbrücke 10 gebildet und wachsen aus der dem Topfabschnitt 13 abgewandten, dem Polrohr 9' entsprechend zugewandten Fläche des Lagergehäuses 12 aus, dies weiter mit Bezug auf einen Längsschnitt gemäß Figur 3 im Wesentlichen parallel ausgerichtet zur Wellenachse x. Im Querschnitt nehmen die Luftführungsstege 18 und 19 im Wesentlichen und vornehmlich radial außen die Krümmung des Polrohres 9' auf, sind demzufolge konzentrisch zur Wellenachse x ausgerichtet. Weiter sind die Luftführungsstege 18 und 19 so positioniert, dass diese in Montagesituation - wie in Figur 3 dargestellt - innenwandig an dem Polrohr 9' anliegen.

In dem dargestellten Ausführungsbeispiel sind über den Umfang verteilt vier Luftführungsstege 18 und 19 vorgesehen. Diese sind paarweise sich diametral gegenüberliegend angeordnet. Ein Paar von Luftführungsstegen 18 ist rückwärtig, das heißt dem Polrohr 9' zugewandt der Kohlenführungen 15 angeformt. Diese Luftführungsstege 18 erstrecken sich in Umfangsrichtung betrachtet jeweils über etwa 45°. Das andere Paar von Luftführungsstegen 19 hingegen weist eine in Umfangsrichtung betrachtete Erstreckung auf, die etwa einem Drittel der in gleicher Richtung betrachteten Umfangserstreckung der Luftführungsstege 18 entspricht.

In Umfangsrichtung um 90° versetzt zu jedem Luftführungssteg 18 sowie auch zu jeder Kohlenführung 15 sind an dem Lagergehäuse 12 die Laschen-Aufnahmeabschnitte 31 ausgeformt. In Rotationsrichtung des Lüfterrades 17 betrachtet sind die kleiner bemessenen Luftführungsstege 19 umfangsmäßig in einer Projektion in eine senkrecht zur Wellenachse x verlaufende Ebene vor den Laschen-Aufnahmeabschnitten 31 positioniert. Entsprechend nehmen gedachte Verbindungslinien der Laschenpaare - das heißt eine Verbindungslinie zwischen den Luftführungsstegen 19 und eine weitere Verbindungslinie zwischen den Luftführungsstegen 18 - einen spitzen Winkel ein, so etwa einen Winkel von 60°, wobei diese Verbindungslinien die Rotorachse x schneiden.

Wie erwähnt, sind die Radialaußenflächen der Luftführungsstege 18 und 19 konzentrisch zur Wellenachse x verlaufend ausgebildet. Die Radial-Innenwandungen 18' und 19' hingegen verlaufen abweichend hierzu, nämlich in Lüfterrad-Laufrichtung betrachtet mit zunehmendem Abstand zur Rotorwelle 2. Hieraus resultiert ein annähernd, zumindest was die radial innere Seite der Luftführungsstege betrifft, leitschaufelartiger Querschnitt. Der zunehmende Abstand der Steginnenfläche zur Rotorwelle 2 geht einher mit einer gleichfalls in Lüfterrad-Drehrichtung betrachteten Reduzierung der Stegdicke. So nimmt diese ausgehend von einer radialen Stärke der Stege von etwa 2 mm kontinuierlich ab bis auf wenige Zehntel Millimeter, so insbesondere bis auf 0,2 bis 0,3 mm. Dies weiter sowohl bei den in Umfangsrichtung betrachtet breiteren Luftführungsstegen 18 als auch bei den schmaleren Luftführungsstegen 19. Entsprechend ist die Steilheit der radial inneren Fläche der Luftführungsstege 18 über die Erstreckungslänge betrachtet geringer als bei den kürzeren Luftführungsstegen 19.

Die Luftführungsstege 18 enden in Umfangsrichtung, weiter in Lüfterrad-Drehrichtung betrachtet zugeordnet jeweils einer in dem Polrohr 9' ausgebildeten Radialöffnung 21. Es sind über den Umfang verteilt vier solcher Radialöffnungen 21 gleichmäßig zueinander beabstandet vorgesehen, wobei weiter in Laufrad-Drehrichtung (Pfeil a) betrachtet die kürzeren Luftführungsstege 19 beabstandet zu den zugeordneten Radialöffnungen 21 enden.

Zufolge der Anordnung vorbeschriebener Luftführungsstege 18 und 19 ist eine verbesserte Luftführung aus dem axial ansaugenden und radial ausblasenden Lüfterrad 17 heraus durch die Radialöffnungen 21 erreicht.

Mit einer der gebördelten Festlegungslaschen 30 des Polrohres 9' wird zugleich ein Leitblech 22 kontaktiert. Dieses ist in dem dargestellten Ausführungsbeispiel ein streifenartiges Biegeteil, welches entlang der Brückenkontur außenseitig über den Topfabschnitt 13 nach radial innen geführt ist und innerhalb des Topfabschnittes 13 wiederum die Klemmbrille 20 kontaktiert. Über dieses Leitblech 22 können elektrische Lagerströme abgeleitet werden. Es können alternativ auch zwei gegenüberliegende Leitbleche 22 vorgesehen sein, zur Kontaktierung beider Festlegungslaschen 30.

Die Luftführungsstege 18 und 19 sowie die Kohlenführungen 15 sind an einem im Wesentlichen etwa den Durchmesser des Polrohres 9' aufnehmenden Grundabschnitt 23 der Lagerbrücke 10 ausgeformt. Abgewandt dem Polrohr 9' geht dieser Grundabschnitt 23 über in den das Gleitlager 7 aufnehmenden Topfabschnitt 13, der weiter einen Außendurchmesser aufweist, der etwa dem 0,5-Fachen des Durchmessers des Grundabschnittes 23 entspricht. Der Übergang von Grundabschnitt 23 zum Topfabschnitt 13 ist konisch geformt. Im Wurzelbereich zum Grundabschnitt 23 besitzt der Übergangsabschnitt 24 einen gegenüber dem Durchmesser des Topfabschnittes 13 etwa um das 1,5-Fache vergrößerten Durchmesser.

Die dem Polrohr 9' abgewandte Oberfläche der Lagerbrücke 10, insbesondere die durch den Grundabschnitt 23, den Übergangsabschnitt 24 und den Topfabschnitt 13 geformte Positiv-Oberfläche zeichnet sich zugewandt dem Polrohr 9' im Wesentlichen als Negativ in der Lagerbrücke 10 ab. So ist dem Polrohr 9' bzw. dem Lüfterrad 17 zugewandt radial außen begrenzt durch eine zugleich die Luftführungsstege 18 und 19 tragende Ringwandung 25 rückwärtig des Grundabschnittes 23 ein senkrecht zur Wellenachse x sich erstreckender Kreisring 26 gebildet. Dieser ist unterbrochen durch die diametral sich gegenüberliegenden Kohlenführungen 15, wobei weiter in Axialrichtung betrachtet die durch dem Lüfterrad 17 zugewandte Fläche des Kreisringes 26 definierte Ebene die Öffnung der Kohlenführung 15 etwa mittig schneidet. Der von dem Kreisring 26 sich in Richtung auf den Topfabschnitt 13 erstreckende Übergangsabschnitt 24 trägt zentral den Pfannenbereich 11 für das Gleitlager 7.

Der Rotor 3 und entsprechend hierüber die Rotorwelle 2 mit dem Lüfterrad 17 besitzen eine definierte Drehrichtung. Diese ist bei dem dargestellten Ausführungsbeispiel mit Blick vom Polrohr 9' in Richtung auf das Lagergehäuse 12 betrachtet entgegen Uhrzeigerrichtung gemäß dem Pfeil a. Auf dem Kreisring 26 ist zugewandt dem Polrohr 9' in Rotationsrichtung a betrachtet vor einer jeden Kohlenführung 15 eine Leitausformung 27 ausgebildet. Diese Leitausformungen 27 sind jeweils geformt durch drei einzelne, in Richtung der jeweiligen Kohlenführung 15 stufenartig ansteigende Rippen 28, die weiter in Rotationsrichtung a betrachtet zwischen sich jeweils einen Freiraum 29 belassen. Weiter in Rotationsrichtung betrachtet entsprechen die Abstandsmaße zwischen den Rippen 28, so auch die in selber Richtung gemessenen Breiten der Freiräume 29 etwa den in selber Richtung gemessenen Stärken der Rippen 28.

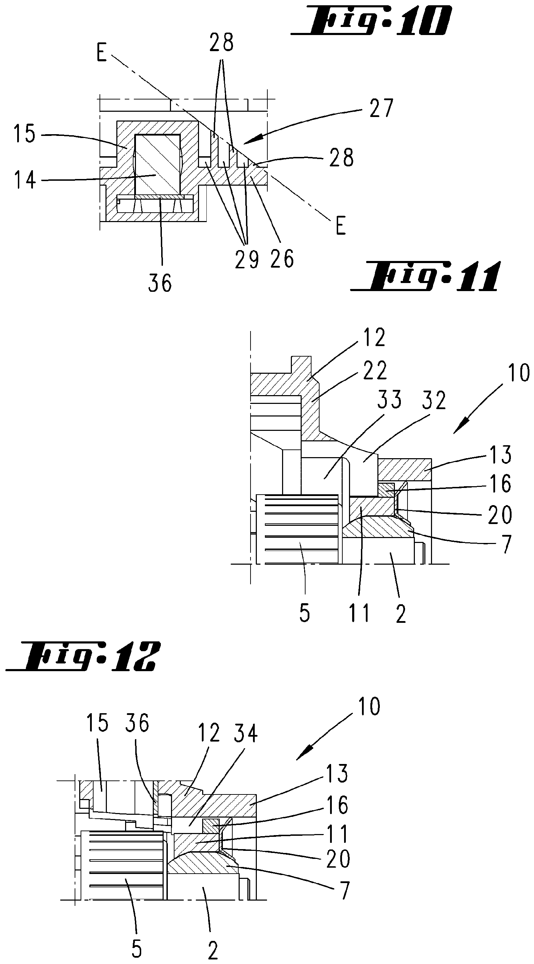

Wie insbesondere aus der Darstellung in Figur 10 zu erkennen, sind die von dem Kreisring 26 weg weisenden freien Stirnflächen dachartig abgeschrägt derart, dass diese abgeschrägten Stirnflächen eine gemeinsame, von der zugewandten Oberfläche des Kreisringes 26 gleichmäßig bis auf die Höhe der zugeordneten Kohlenführung ansteigende schräge Ebene E definieren.

Die den Freiräumen 29 zugewandten Rippen-Seitenflächen sind in ihrer Radialerstreckung orientiert an die Wellenachse x.

Durch die in Rotationsrichtung a hintereinander liegend ansteigenden Rippen 28 ist eine rampenartige Leitausformung 27 vor einer jeden Kohlenführung 15 erreicht. So ist auf der Luvseite einer jeden Kohlenführung 15 eine treppenartige Rippenstruktur geschaffen, um eine geschlossene Schicht von Kohlestaubablagerung zu unterbinden. Die stufenartige Struktur wirkt durch die Einschlagwirbel, die sich zwischen den Rippen 28 einstellen, wie eine geschlossene Rampe. Der Kohlestaub wird hierbei wirksam abgeleitet durch Überführen über die Kohlenführungen 15 hinweg. Gegebenenfalls wird Kohlestaub im Bodenbereich der durch die Rippen 28 gebildeten Freiräume 29 abgelagert. Auf diese Weise wird eine geschlossene Kohlestaubschicht vermieden, die zu einem Fehlerstrom führen kann (Hochspannungsfehler).

Radial nach innen versetzt zu der jeweiligen Leitausformung 27 ist ein zunächst parallel zur Rotorwelle 2 verlaufender Luftweg 32 ausgebildet, dies weiter im Wesentlichen in dem konisch gebildeten Übergangsabschnitt 24. Nach axial außen, das heißt abgewandt dem Polrohr 9' öffnet sich der Luftweg 32 zufolge der konischen Ausgestaltung des Übergangsabschnittes 24 sowohl in Axial- als auch in Radialrichtung nach außen. Entsprechend dieser Anordnung ist der Luftweg 32 in einer Projektion auf eine senkrecht zur Wellenachse x ausgerichtete Ebene radial außerhalb des Gleitlagers 7 und des das Gleitlager 7 aufnehmenden Topfabschnittes 13 positioniert.

Nach axial innen, das heißt zugewandt dem Polrohr 9' und dem Lüfterrad 17 durchsetzt der Luftweg 32 einen radial inneren Teilabschnitt des Kreisrings 26, weiter den Abschnitt, der die Rippen 28 trägt. Die hier in das Motorinnere gerichtete Öffnung 33 des Luftweges 32 ist des Weiteren auch nach radial innen in Richtung auf den Kommutator 5 weisend gerichtet.

Entsprechend der Zuordnung des Luftweges 32 zu den Rippen 28 ist der Luftweg 32 flankierend zu der zugeordneten Kohlenführung 15 positioniert. Auch auf der in Rotationsrichtung a betrachteten anderen Seite dieser Kohlenführung 15 ist ein solcher Luftweg 32 mit einer nach radial innen gerichteten Öffnung 33 vorgesehen, demzufolge die Kohlenführung 15 beidseitig flankiert über die Luftwege 32 kühlbar ist.

Die beiden einer Kohlenführung 15 zugewandten Luftwege 32 sind über eine kreisringabschnittförmige Nut 34 verbunden. Letztere erstreckt sich in Axialrichtung vom Polrohr 9' betrachtet hinter der zugeordneten Kohlenführung 15 im, den Pfannenbereich 11 ausformenden Abschnitt des Lagergehäuses 12. In einer Projektion auf eine senkrecht zur Wellenachse x gerichtete Ebene verläuft die kreisringförmige Nut 34 radial betrachtet unmittelbar vor der zugeordneten Kohlenführung 15; eine gedachte Verlängerung der Kohlenführung 15 nach radial innen querend.

Jede Nut 34 ist über ihre gesamte Umfangserstreckung nach radial innen durch den verbleibenden Abschnitt des Pfannenbereiches 11 geschlossen. Nach radial außen öffnet sich die Nut 34 lediglich im Bereich der Luftwege 32. Der in Umfangsrichtung betrachtete zentrale Abschnitt der Nut 34 ist nach radial außen durch die zugeordnete Kohlenführung 15 überdeckt.

Zufolge dieser Ausgestaltung sind um den Topfabschnitt 13 des Gleitlagersitzes vier Luftwege 32 unmittelbar neben den Kohlenführungen 15 geschaffen, über welche zum Einen das Gleitlager 7, darüber hinaus aber auch die in den Kohlenführungen 15 aufgenommenen Kohlen 14 beidseitig gekühlt werden, da die Luft hier vorwiegend axial zum Lüfterrad 17 strömt. Die die Luftwege 32 einer Kohlenführung 15 verbindende Nut verhindert eine Ablagerung von Kohlenstaub, womit eine möglichst lange elektrische Kriechstrecke realisiert ist. Zudem wird hier auch das Kunststoffmaterial im unmittelbaren Gleitlagersitz weiter gekühlt.

Die Kontaktierung der in den Kohlenführungen 15 aufgenommenen Kohlen 14 erfolgt über Kontaktbleche 35. Jeder Kohlenführung 15 ist ein solches als Stanzteil gefertigtes, ebenflächiges Kontaktblech 35 zugeordnet.

Jedes Kontaktblech 35 ist im Grundriss zunächst im Wesentlichen T-förmig gestaltet, wobei der T-Schenkel den Kontaktabschnitt 36 für die zugeordnete Kohle 14 bildet. Die Kontaktierung einer Kohle 14 erfolgt nur entlang einer Seitenfläche. Entsprechend deckt der Kontaktabschnitt 36 nur eine der vier Wände der Kohlenführung 15 ab, nämlich die dem Polrohr 9' radial abgewandte, sich in einer Ebene quer zur Wellenachse x erstreckende Kohlenführungs-Fläche.

Die quer zum Kontaktabschnitt 36 beidseitig abragenden T-Stege formen zum Einen einen Anschlussabschnitt 37 zur Kontaktierung des Kontaktbleches 35 mittels eines üblichen Steckkontaktes. Der andere T-Steg ist gegenüber dem Anschlussabschnitt 37 in Erstreckungsrichtung des Kontaktabschnittes 36 betrachtet verbreitert, dies weiter bei einer im Wesentlichen gemeinsamen oberen, dem Kontaktabschnitt 36 abgewandten Begrenzung.

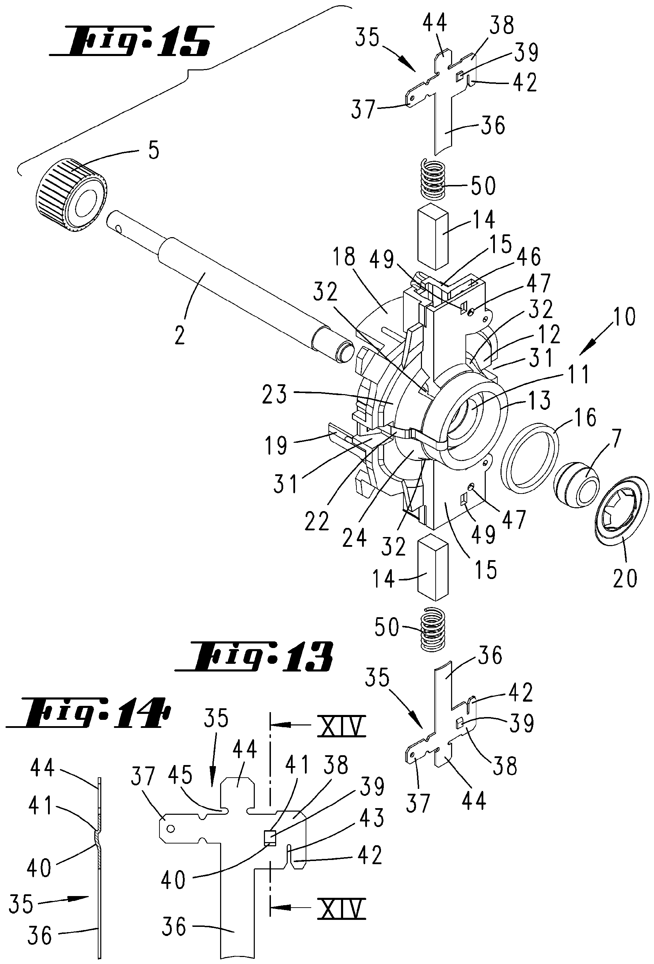

Der dem Anschlussabschnitt 37 gegenüberliegende T-Steg ist zunächst als Festlegungsabschnitt 38 ausgebildet. Dieser weist eine aus der Fläche heraus ausgeprägte Rastzone 39, die in einen Querschnitt gemäß der Darstellung in Figur 14 eine Auflaufschräge 40 und eine Rastschulter 41 aufweist.

Weiter ist in dem Festlegungsabschnitt 38 ein Schneidklemmabschnitt 42 integriert. Dieser ist gebildet durch einen Schlitz 43, der sich zugewandt dem freien Ende des Kontaktabschnittes 36 trichterartig öffnet. Die Schlitzbreite ist angepasst an den üblichen Durchmesser eines Anschlussbeins eines elektronischen Bauteils, wie die in den Darstellungen gezeigten Funkentstörkondensatoren 48.

Darüber hinaus erstreckt sich in Verlängerung des Kontaktabschnittes 36 über die quer verlaufenden T-Stege eine Kontaktfahne 44, die über einen eingeschnürten Abschnitt 45 an dem Kontaktabschnitt 36 angebunden ist. Auch diese Kontaktfahne 44 erstreckt sich bei einstückiger Ausgestaltung ebenengleich mit dem Kontaktabschnitt 36 sowie mit dem Anschlussabschnitt 37 und dem Festlegungsabschnitt 38.

Zugeordnet der abzudeckenden Seite der Kohlenführungen 15 ist jeweils zugeordnet einer Kohlenführung in der Lagerbrücke 10 eine die Kohlenführung 15 fußseitig freilegende Schlitzaufnahme 46 vorgesehen. Diese erstreckt sich in einer Ebene senkrecht zur Wellenachse x. Bestückt wird das Lagergehäuse 12 mit den Kontaktblechen 35, indem diese in dieser senkrecht zur Wellenachse x ausgerichteten Ebene in die Schlitzaufnahmen 46 von radial außen eingeführt werden, wobei weiter in vollständig eingeschobenem Zustand der Kontaktbleche 35 deren seitlich abragenden Anschlussabschnitte 37 aus der Lagerbrücke 10 bzw. der zugeordneten Kohlenführung 15 frei zur Kontaktierung mittels eines Steckkontaktes abragen. Der dem Anschlussabschnitt 37 gegenüberliegende Festlegungsabschnitt 38 taucht in einen entsprechend ausgeformten, von der Schlitzaufnahme 46 durchsetzten Gehäuseabschnitt ein, der darüber hinaus quer zur Flächenerstreckung des Kontaktbleches 35 ausgerichtete Durchstecköffnungen 47 für jeweils ein Anschlussbein für einen Kondensator 48 besitzt. Diese Durchstecköffnungen 47 sind in den Einschublinien der Schneidklemmabschnitte 42 positioniert, so dass ein durch die Stecköffnungen 47 gestecktes Bein eines Kondensators 48 selbsttätig im Zuge des Einschiebvorganges des Kontaktbleches 35 in die Schlitzaufnahme 46 von dem Schlitz 43 erfasst wird. Hiernach ist der Kondensator 48 über ein Bein festgelegt und zugleich kontaktiert.

Benachbart zu den Durchstecköffnungen 47 ist eine fensterartige Öffnung 49 vorgesehen, in die die Rastzone 39 des Kontaktbleches 35 in der vollständig eingeschobenen Stellung des Kontaktbleches 35 einfällt. Die Rastschulter 41 setzt sich hierbei sperrend gegen eine Fensterrandkante. Entsprechend ist das Kontaktblech 35 in Richtung entgegen der Einschubrichtung gesichert.

Die Länge des Kontaktabschnittes 36 ist so gewählt, dass in der eingeschobenen Kontaktstellung dieser mit der nach radial innen in Richtung auf den Kommutator 5 weisenden Öffnung der zugeordneten Kohlenführung 15 endet.

In üblicher Weise werden die Kohlenführungen 15 mit Kohlen 14 bestückt. Diese stehen über ihre gesamte Erstreckungslänge über eine Fläche mit dem Abschnitt 36 des Kontaktbleches 35 in Kontakt. Zur radial nach innen gerichteten Belastung in Richtung auf den Kommutator 5 ist rückwärtig jede Kohle 14 durch eine Druckfeder 50 beaufschlagt. Letztere findet wiederum ihr Widerlager durch die um 90° nach oben abgebogene Kontaktfahne 44, die entsprechend die Kohlenführung 15 nach radial außen hin verschließt.

## Patentansprüche

1. Elektromotor (1) mit einem Rotor (3) und einem Stator (4), wobei der Rotor (3) eine in einem Gleitlager (7) gehaltene Rotorwelle (2) und der Stator (4) ein Polrohr (9') aufweist, wobei weiter drehfest mit der Rotorwelle (2) ein Kommutator (5) vorgesehen ist, der mit in Kohlenführungen (15) aufgenommenen Kohlen (14) zusammenwirkt, wobei die Kohlenführungen (15) und das Gleitlager (7) in einer gemeinsamen Lagerbrücke (10) aufgenommen sind, in welcher weiter radial außerhalb des Gleitlagers (7) in Richtung der Rotorwelle (2) verlaufende, in das Innere der Lagerbrücke (10) gerichtete Öffnungen (33) aufweisende Luftwege (32) ausgebildet sind, wobei ein Lüfterrad (17) zwischen dem Kommutator (5) und dem Rotor (3) drehfest auf der Rotorwelle gehaltert ist, **dadurch gekennzeichnet, dass** die Lagerbrücke (10) auf der dem Lüfterrad (17) zugewandten Seite einen in das Polrohr (9') des Stators (4) einragenden und das Lüfterrad (17) radial überragenden Luftführungssteg (18, 19) aufweist.

2. Elektromotor nach Anspruch 1, **dadurch gekennzeichnet, dass** zwei einer Kohlenführung (15) zugeordnete Luftwege (32) über eine die Kohlenführung (15) querende Nut (34) verbunden sind.

3. Elektromotor nach einem der vorhergehenden Ansprüche, **dadurch gekennzeichnet, dass** die Öffnung (33) eines flankierend zu einer Kohleführung (15) angeordneten Luftweges (32) sich in radialer Projektion auf dem Kommutator (5) abbildet.

## Claims

1. Electric motor (1) comprising a rotor (3) and a stator (4), the rotor (3) comprising a rotor shaft (2) held in a sliding bearing (7) and the stator (4) comprising a pole tube (9'), a commutator (5) also being provided for conjoint rotation with the rotor shaft (2), which commutator interacts with carbon brushes (14) that are received in carbon-brush guides (15), the carbon-brush guides (15) and the sliding bearing (7) being received in a common bearing bracket (10) in which air passages (32) are also formed, which air passages comprise openings (33) that point into the inside of the bearing bracket (10) and extend radially outside the sliding bearing (7) towards the rotor shaft (2), a fan wheel (17) between the commutator (5) and the rotor (3) being held on the rotor shaft for conjoint rotation therewith,
**characterised in that** the bearing bracket (10) comprises, on the side thereof facing the fan wheel (17), an air-guiding projection (18, 19) which protrudes into the pole tube (9') of the stator (4) and radially projects beyond the fan wheel (17).

2. Electric motor according to claim 1, **characterised in that** two air passages (32) assigned to one carbon-brush guide (15) are connected via a channel (34) crossing the carbon-brush guide (15).

3. Electric motor according to either of the preceding claims, **characterised in that** the opening (33) of an air passage (32) arranged so as to flank a carbon-brush guide (15) is projected on the commutator (5) in a radial projection.

## Revendications

1. Moteur électrique (1) ayant un rotor (3) et un stator (4), dans lequel le rotor (3) comprend un arbre de rotor (2) maintenu dans un palier lisse (7) et le stator (4) comprend un tube polaire (9'), dans lequel est prévu en outre un collecteur (5) solidaire en rotation avec l'arbre de rotor (2) et qui coopère avec des charbons (14) reçus dans des guides de charbon (15), dans lequel les guides de charbon (15) et le palier lisse (7) sont reçus dans un pont de palier commun (10) dans lequel sont en outre formés des passages d'air (32) s'étendant radialement à l'extérieur du palier lisse (7) dans la direction de l'arbre de rotor (2) et présentant des ouvertures (33) dirigé vers l'intérieur du pont de palier (10), dans lequel une roue de ventilateur (17) est montée solidaire en rotation sur l'arbre de rotor entre le collecteur (5) et le rotor (3), **caractérisé en ce que** le pont de palier (10), du côté tourné vers la roue de ventilateur (17), comprend une nervure de guidage d'air (18, 19) faisant saillie dans le tube polaire (9') du stator (4) et surplombant radialement la roue de ventilateur (17).

2. Moteur électrique selon la revendication 1, **caractérisé en ce que** deux passages d'air (32) associés à un guide de charbon (15) sont reliés par une rainure (34) qui traverse le guide de charbon (15).

3. Moteur électrique selon l'une des revendications précédentes, **caractérisé en ce que** l'ouverture (33) d'un passage d'air (32) agencé à côté d'un guide de charbon (15) se projette, en projection radiale, sur le collecteur (5).
